# EUROPEAN PATENT SPECIFICATION

(11) **EP 3 608 598 B1**
(45) Date of publication and mention of the grant of the patent: **11.01.2023**
(21) Application number: 18781227.6
(22) Date of filing: 27.03.2018
(51) Int. Cl.: F24F 5/00, F28D 20/02, F28F 3/06, F28F 27/00, F24D 5/10, F24D 19/10, F24F 7/10, F24F 13/02

(54) **HEAT STORAGE SYSTEM AND INSTALLATION METHOD FOR LATENT HEAT STORAGE MATERIAL THEREFOR**
WÄRMESPEICHERSYSTEM UND INSTALLATIONSVERFAHREN FÜR LATENTES WÄRMESPEICHERMATERIAL DAFÜR
SYSTÈME DE STOCKAGE DE CHALEUR ET PROCÉDÉ ASSOCIÉ D'INSTALLATION DE MATÉRIAU DE STOCKAGE DE CHALEUR LATENTE

(30) Priority: 07.04.2017 JP 2017076791
(43) Date of publication of application: 12.02.2020
(73) Proprietor: Yazaki Energy System Corporation, Minato-ku, Tokyo 108-8333 (JP)
(72) Inventor: NAKAMURA Takuju, Tokyo 108-0075 (JP); GUNJI Kai, Tokyo 108-0075 (JP)
(74) Representative: Grünecker Patent- und Rechtsanwälte PartG mbB
(86) International application number: PCT/JP2018/012612
(87) International publication number: WO 2018/186246

(56) References cited:
- EP-A1- 2 098 654
- JP-A- H0 634 289
- JP-A- H05 157 279
- JP-A- H06 240 853
- JP-A- 2000 310 032
- JP-A- 2001 141 262
- JP-A- 2001 304 626
- JP-A- 2004 177 051
- JP-A- 2011 133 222
- JP-A- 2016 014 517
- JP-A- 2016 145 668
- JP-U- H 051 918
- US-A1- 2013 228 308
- US-A1- 2014 123 576
- HESSISCHES MINISTERIUM FÜR UMWELT, ENERGIE, LANDWIRTSCHAFT UND VERBRAUCHERSCHUTZ: "Wärmedämmung von Außenwänden mit dem Wärmedämmverbundsystem", ENERGIESPARINFORMATIONEN, no. 02, November 2012 (2012-11), pages 9-10, Wiesbaden ISBN: 978-3-89274-298-2

## Description

### TECHNICAL FIELD

The present invention relates to a heat storage system and an installation method of a latent heat storage material thereof.

### BACKGROUND ART

In the related art, by focusing on a daily temperature range of an outside temperature, a system that stores cold heat or warm heat, which is necessary for daily use, under a floor or the like for approximately half a day and uses the heat for air conditioning, in order to use an air conditioning effect using nighttime cold heat or midnight power before noon or use power deviated from peak power demand is proposed (see Patent Literatures 1 to 7).

In an area where there is a demand for heating and cooling depending on a season, a system in which the systems described in Patent Literatures 1 to 7 are expanded, and natural cold heat or warm heat is used over the season is also proposed (Patent Literatures 8 to 11).

### CITATION LIST

### PATENT LITERATURE

Patent Literature 1: JP-A-2000-213776
Patent Literature 2: JP-A-2003-185373
Patent Literature 3: JP-A-2012-220131
Patent Literature 4: JP-A-H5-157279
Patent Literature 5: JP-B-3226093
Patent Literature 6: JP-B-4992045
Patent Literature 7: JP-B-5666820
Patent Literature 8: JP-B-3525246
Patent Literature 9: JP-B-5807799
Patent Literature 10: JP-A-2009-299920
Patent Literature 11: JP-A-2006-207985

Further prior art is known from document JP 2016 014517 A, which discloses the preamble of claim 1, as also does Patent Literature 4.

### SUMMARY OF INVENTION

### TECHNICAL PROBLEM

Here, since the systems described in Patent Literatures 8 to 11 use the stored cold heat or warm heat over the season, a quantity of cold or warm heat required becomes corresponding to a demand for approximately 100 days. Therefore, in the systems described in Patent Literatures 8 to 11, the quantity of cold or warm heat required is two digits larger than that in the systems of Patent Literatures 1 to 7, and when converted to a weight of a latent heat storage material, for example, the weight becomes 100 kg/m² order.

From the viewpoint of reducing the weight of the latent heat storage material, a latent heat storage material having high storage efficiency is used. For example, in a case of cold heat storage, it is conceivable to use ice having a melting point and a freezing point of 0 °C or use sodium acetate trihydrate having a melting point and a freezing point of 58 °C. However, in the case of using these latent heat storage materials, since the melting point and the freezing point are low or high, leakage of stored cold or warm heat becomes large. Therefore, a heat storage system that performs both heating and cooling will include both a latent heat storage material for cold heat storage and a latent heat storage material for warm heat storage. As a result, there is a possibility to lead to an increase in a weight.

The present invention was made to solve such problems, and an object thereof is to provide a heat storage system that can perform both heating and cooling and can achieve a reduction in a weight of the latent heat storage material to be used when storing heat over the season, and an installation method of a latent heat storage material thereof.

### SOLUTION TO PROBLEM

According to the present invention, there is provided a heat storage system according to claim 1 including an indoor space, a heat storage space adjacent to the indoor space, and a control unit for controlling the introduction and blocking of outside air to the heat storage space. In the heat storage space, a latent heat storage material having a melting point or a freezing point in a range of 5 °C or higher and 30 °C or lower is installed. Also, a heat resistance between the heat storage space and the outside air is set to be greater than a heat resistance between the heat storage space and the indoor space.
In particular, the object is solved by the subject matter of claim 1.

According to the present invention, there is provided an installation method of a latent heat storage material of the heat storage system. In a first step, a bag-shaped container made of a pillow packing material or a foldable film is prepared in a specific floor. In a second step, the latent heat storage material with a temperature 10 °C or higher than the melting point is transported to the specific floor by pumping using a pump or by lifting a tank storing the latent heat storage material. In a third step, the bag-shaped container formed by heat-sealing the pillow packaging material or the bag-shaped container made of a foldable film is filled with the latent heat storage material transported and sealed in the specific floor. In a fourth step, the bag-shaped container in which the latent heat storage material is enclosed is installed to the heat storage space in the specific floor.

### ADVANTAGEOUS EFFECTS OF INVENTION

According to the present invention, both heating and cooling can be performed, and it is possible to achieve a reduction in a weight of the latent heat storage material to be used when storing heat over the season.

### BRIEF DESCRIPTION OF THE DRAWINGS

Fig. 1 is a configuration view illustrating a heat storage system according to an embodiment of the present invention.
Fig. 2 is a partial plan view of the heat storage system according to the present embodiment.
Fig. 3 is a plan view illustrating a modification example of a plurality of trays shown in Fig. 2.
Fig. 4 is a sectional view of the tray shown in Fig. 2.
Figs. 5A to 5C are perspective views each showing an example of the bag-shaped container shown in Fig. 2, wherein Fig. 5A shows a first example, Fig. 5B shows a second example, and Fig. 5C shows a third example.
Figs. 6A and 6B are perspective views each showing an example of the through hole of a floor plate shown in Fig. 1, wherein Fig. 6A shows a first example and Fig. 6B shows a second example.

### DETAILED DESCRIPTION OF EMBODIMENTS

Hereinafter, the present invention will be described in accordance with a preferred embodiment. The present invention is not limited to embodiments shown below and appropriate modifications can be made within the scope not departing from the gist of the present invention. Also, in an embodiment shown below, although there is a case where illustration or description of a part of a configuration is omitted, it is needless to say that, in details of the omitted technique, appropriately known or well-known techniques are applied within a range not inconsistent with the contents described below.

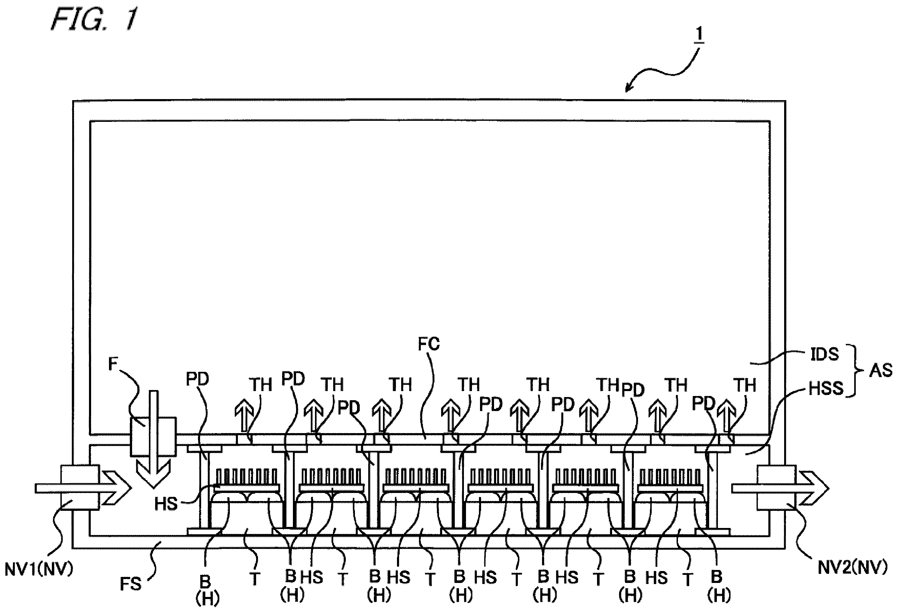

Fig. 1 is a configuration view illustrating a heat storage system according to an embodiment of the present invention. As shown in Fig. 1, a heat storage system 1 performs heating and cooling of an indoor space IDS, which is a space where people live or work, by using a latent heat storage material H, and is used for, for example, each floor of a building such as a high-rise building. That is, the heat storage system 1 is applied to each floor. The heat storage system 1 is not limited to a high-rise building as long as it is a building, and may be used for a low-rise apartment or a single-family house.

This heat storage system 1 schematically includes an adiabatic space AS, the latent heat storage material H, and a natural ventilator (control unit) NV.

The adiabatic space AS is a space blocked from outside air, and includes the indoor space IDS and a heat storage space HSS. The indoor space IDS is a space where people live or work as described above, and the heat storage space HSS is a space where a latent heat storage material H is installed. In the present embodiment, the indoor space IDS has a structure adjacent to the heat storage space HSS. For example, as shown in Fig. 1, the indoor space IDS has a structure adjacent to the heat storage space HSS via a floor material (as an example of a partition material, a floor plate FC to be described later).

Although the adiabatic space AS is a space blocked from the outside air, there is no limitation about ventilation using the natural ventilator NV, ventilation by opening a window, and ventilation using a ventilation opening separately attached to the indoor space IDS. In addition, the heat storage space HSS is not limited to the above description, and may have a structure adjacent to the indoor space IDS via a ceiling material or a wall material (as an example of the partition material) or may also be a space defined by double skins and the like of a facade part and a wall part. Hereinafter, the indoor space IDS having a structure adjacent to the heat storage space HSS via the floor material will be described as an example.

The natural ventilator NV controls the introduction and blocking of the outside air to the heat storage space HSS. The natural ventilator NV includes a first ventilator NV1 on an introduction side of the outside air and a second ventilator NV2 exhausting inside air of the heat storage space HSS. From a viewpoint of air permeability, it is preferable that the first ventilator NV1 and the second ventilator NV2 are respectively provided on walls facing each other among walls defining the heat storage space HSS.

This natural ventilator NV is incorporated in a window sash part or a pericounter, or attached to an outer wall. The natural ventilator NV naturally controls an air volume according to outside air speed regardless of electric control or closes in high winds, and can block intake of the outside air and discharge of the inside air by electrical control. When using this natural ventilator NV, it is possible to perform appropriate heat storage with power saving in a manner that the outside air is naturally taken in, cold or warm heat is stored in the latent heat storage material H, and the external air is blocked by electric control when the outside air temperature is not appropriate for heat storage. Although it is inferior to power saving property, a ventilator including a fan and an opening and closing port, which are electrically controlled may be provided in place of the natural ventilator NV.

Here, the latent heat storage material H according to the present embodiment has a melting point or a freezing point in a range of 5 °C or higher and 30 °C or lower, and is a normal temperature latent heat storage material having a melting point or a freezing point preferably in a range of 15 °C or higher and 26 °C or lower and more preferably in a range of 18 °C or higher and 23 °C or lower. The preferred range slightly varies depending on the country or a region where the heat storage system 1 is used. Specifically, examples of the latent heat storage material H in a temperature zone of normal temperature include paraffins, inorganic salt hydrates, and saccharides. Since the latent heat storage material H is used in architecture in a large amount, it is desirable to be noncombustible. Therefore, an inorganic salt hydrate (such as calcium chloride hydrate or sodium sulfate hydrate) may be used.

Furthermore, according to the present invention, a heat resistance between the heat storage space HSS and the outside air is set to be greater than a heat resistance between the heat storage space HSS and the indoor space IDS. Specifically, a heat transmission coefficient between the heat storage space HSS and the outside air is preferably 1 W/m²K or less, and more preferably 0.5 W/m²K or less (for example, 0.46 W/m²K) on average on the outer wall. On the other hand, a heat transmission coefficient between the heat storage space HSS and the indoor space IDS may be 15 W/m²K or less, specifically 2 to 10 W/m²K. With this heat transmission coefficient, cold or warm heat of the heat storage space HSS will selectively leak to the indoor space IDS rather than the outside. In addition, since the latent heat storage material H in the temperature zone of normal temperature is installed in the heat storage space HSS, a comfortable temperature leaks, and it is possible to perform heating and cooling using the leakage.

In addition, the heat storage system 1 according to the present embodiment includes a plurality of trays T, a bag-shaped container (a container) B, and a heat sink HS in the heat storage space HSS.

The plurality of trays T are for mounting the bag-shaped container B storing the latent heat storage material H thereon, and are placed on a floor slab FS under the floor in the present embodiment. This tray T receives the latent heat storage material H that leaks when the bag-shaped container B is damaged, and also receives condensation water generated when the ambient air cools below a dew point to be condensed. In particular, when the latent heat storage material H is harmful to concrete which is a material of the floor slab FS, the tray T plays a role to stop this. As a precaution, although the floor slab FS is formed with salt resistant concrete, it is preferable to be coated.

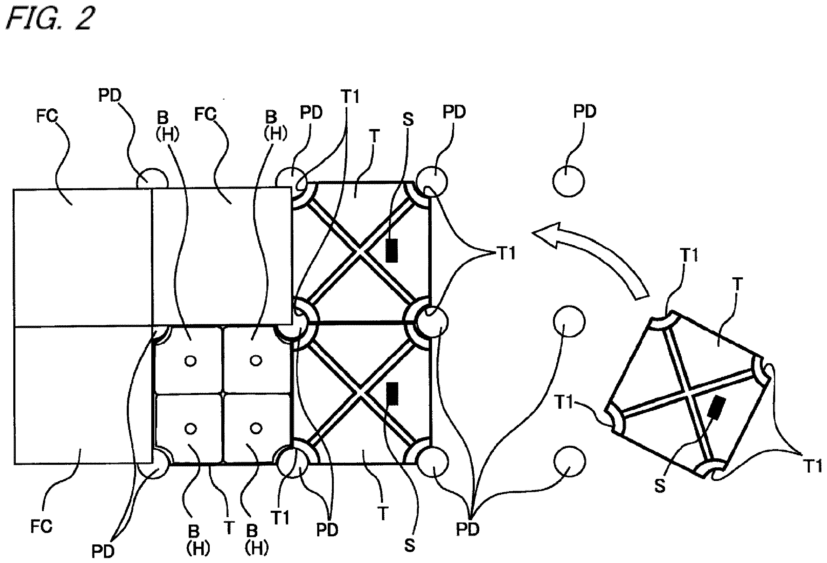

Fig. 2 is a partial plan view of the heat storage system 1 according to the present embodiment. The heat storage system 1 according to the present embodiment has a structure in which the heat storage space HSS and the indoor space IDS are partitioned by a plurality of floor plates FC shown in Figs. 1 and 2. The plurality of floor plates FC are supported at four corners by a plurality of pedestal PD. The plurality of pedestal PD are pillar members disposed at regular intervals in a longitudinal direction and a lateral direction when the floor is viewed in plan, and are disposed on the floor slab FS. Such a floor structure is called, for example, a free access floor (such as an OA floor and a false floor). In the present embodiment, since the latent heat storage material H has a considerable weight, disposition on the floor slab FS is preferable. That is, the heat storage space HSS is preferably placed directly above the floor slab FS.

The plurality of trays T are placed on the floor slab FS so as to be stored in the free access floor (that is, in the heat storage space HSS). Here, the plurality of trays T have substantially the same dimensions as those of the plurality of floor plates FC when viewed from plan view. Furthermore, since the plurality of trays T are mounted on the floor slab FS, notches T1 to avoid the plurality of pedestals PD are formed at the four corners. As a result, the plurality of trays T are arranged without gaps, and are installed with good area efficiency to cover the entire surface of the floor slab FS. Also, the pedestal PD can be placed so as to fit the notches T1 of the tray T and positioning of the pedestal PD can be easily performed.

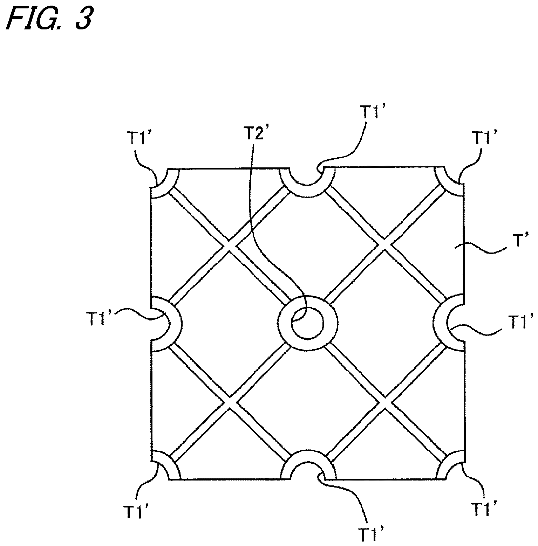

Fig. 3 is a plan view illustrating a modification example of the plurality of trays T shown in Fig. 2. As shown in Fig. 3, a tray T' according to the modification example has a dimension that is a size of two times (as an example of two or more integer multiples) the floor plate FC, in the longitudinal direction and the lateral direction. In addition, in the tray T' according to the modification example, notches T1' are formed at predetermined positions, such as four corners and an intermediate portion of each side, so as to avoid the pedestal PD. Furthermore, in the tray T's according to the modification example, a hole part T2' through which the pedestal PD penetrates is formed at a predetermined position such as a center portion. Even in a case of this configuration, as in the tray T shown in Fig. 2, a plurality of trays T' are arranged without gaps, and are installed with good area efficiency to cover the entire surface of the floor slab FS. Also, the pedestal PD can be placed so as to fit the notches T1's and the hole part T2' of the tray T' and positioning of the pedestal PD can be easily performed.

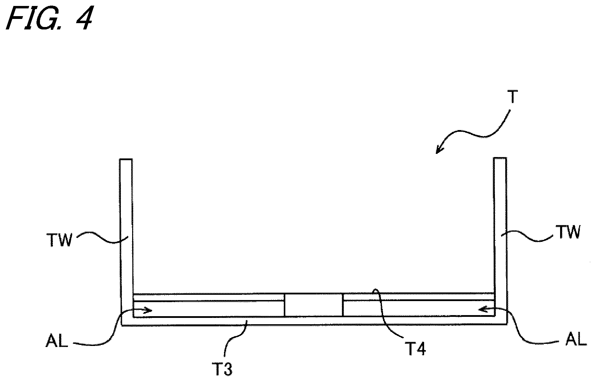

Fig. 4 is a sectional view of the tray T shown in Fig. 2. As shown in Fig. 4, in the tray T, a bottom wall T3 on which the floor slab FS is installed, and an intermediate wall T4 on which the bag-shaped container B storing the latent heat storage material H is installed are separated up and down, and an adiabatic layer AL is formed by air therebetween. That is, the tray T becomes to have the adiabatic layer AL that insulates the floor slab FS and the latent heat storage material H stored in the bag-shaped container B. Accordingly, when insulation from the floor slab FS is required, as in an internally insulated building, adiabaticity can be secured, and the amount of leakage of stored cold or warm heat through the floor slab FS is reduced.

Furthermore, as shown in Fig. 2, the plurality of trays T include a sensor S for detecting breakage of the bag-shaped container B. The sensor S is configured of, for example, any one or more of a weight sensor, a pressure sensor, and a wet sensor. The sensor S is configured to send a detection signal to another device and the like. When the breakage of the bag-shaped container B is detected, an alarm sounds from the other device or an error message is notified to an administrator.

Here, when the latent heat storage material H is the calcium chloride hydrate, the calcium chloride hydrate has deliquescence. When the bag-shaped container B is damaged, the calcium chloride hydrate accumulates on the tray T in a form of slurry, while absorbing moisture in surrounding air. Therefore, if a tray T is provided with a liquid sump and a leak sensor is installed therein, damage (breakage) of the bag-shaped container B can be detected.

Also, when the latent heat storage material H is the sodium sulfate hydrate, the sodium sulfate hydrate is damaged from wind in a normal humidity environment. When the bag-shaped container B is damaged, the sodium sulfate hydrate loses weight due to evaporation of water to the surroundings. Therefore, it is possible to detect the damage (breakage) of the bag-shaped container B by detecting the weight loss by the pressure sensor or the weight sensor. In Fig. 2, the sensor S is provided on the intermediate wall T4 of tray T (see Fig. 4), but the present invention is not limited thereto. For example, projections that transmit a load to the floor slab FS while supporting the weight of the latent heat storage material H and the tray T are provided on the lower surface of the tray T (the lower surface of the bottom wall T3), and the pressure sensor or the weight sensor may be provided thereto.

Also, the sensor S is not limited to the weight sensor, the pressure sensor, and the wet sensor. As long as the breakage of the bag-shaped container B can be detected, other sensors such as an optical sensor including a light emitting and receiving element may be used.

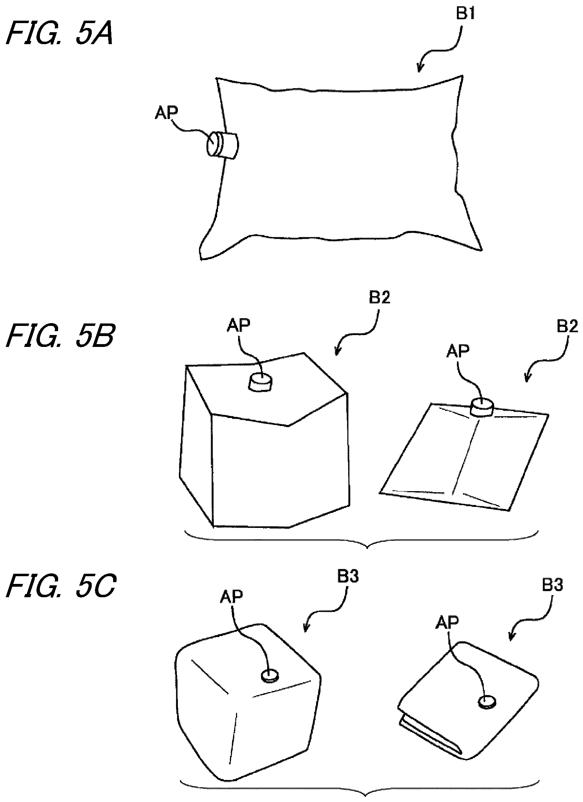

Figs. 5A to 5C are perspective views each showing an example of the bag-shaped container B shown in Fig. 2. Fig. 5A shows a first example. Fig. 5B shows a second example. Fig. 5C shows a third example. In a bag-shaped container B1 shown in Fig. 5A, portions corresponding to upper and lower sides and left and right sides of two stacked film sheets are pressed by heat sealing and an aperture AP which can be opened and closed is formed at a predetermined position. The aperture AP can be configured, for example, by the same structure as a cap portion of a plastic bottle. The bag-shaped container B is in a state where the inside and the outside are communicated when the aperture AP is opened, and is in a state in which the inside and the outside of the bag-shaped container B are blocked from each other when the aperture AP is closed. The bag-shaped container B1 may not include the aperture AP, in which the inside is filled with the latent heat storage material H and the upper and lower sides and the left and right sides are heat-sealed.

Bag-shaped containers B2 and B3 shown in Figs. 5B and 5C are containers made of foldable film, and have a substantially cubic or rectangular shape when unfolded. In the bag-shaped containers B2 and B3, the aperture AP which can be opened and closed is formed at a portion which becomes an upper surface when unfolded. A shape when folded (a shape when not developed) is not limited to those shown in Figs. 5B and 5C, and can be various shapes. Also, the aperture AP is the same as that shown in Fig. 5A.

Since the bag-shaped container B as described above is made of a film and is foldable, the bag-shaped container B is excellent in transport. In addition, when the bag-shaped container B is made of a film, the outer wall thereof is a thin film. Therefore, it can be said that a structure easily facilitates heat exchange with air in the heat storage space HSS. Since the bag-shaped container B facilitates the heat exchange with the air in the heat storage space HSS (in particular, since the heat sink HS is placed on an upper portion of the bag-shaped container B as will be described later), it is preferable to prevent air from entering at the time of sealing.

Also, it is preferable to enclose the latent heat storage material H in a volume slightly smaller than the maximum volume of the bag-shaped container B so as to cope with expansion of the latent heat storage material H during solidification. Furthermore, in order to use cold or warm heat over the season, it is preferable to enclose the latent heat storage material H having a heat storage capacity of 1 kWh or more or a weight of 20 kg or more per square meter of floor area.

Fig. 1 is referred to again. The heat sink HS is a metal member made of a metal material such as aluminum, iron, and copper which are good in heat transfer characteristics, and has a large number of heat dissipating fins arranged in parallel to increase a surface area. In the present embodiment, the heat sink HS is placed on the bag-shaped container B. In particular, in the present embodiment, since the bag-shaped container B has a thin film structure made of a film, the bag-shaped container B changes flexibly into a shape that can receive the heat sink HS just by placing the heat sink HS on the bag-shaped container B, and heat can be transferred to air of the heat storage space HSS by the heat sink HS via the bag-shaped container B of the thin film. Since the air in the heat storage space HSS flows from a first ventilator NV1 to a second ventilator NV2, the heat sink HS is preferably placed on the bag-shaped container B such that the heat dissipating fins of the heat sink HS and the air flow direction are parallel with each other. That is, in a case of the example shown in Fig. 1, although the heat dissipating fins of the heat sink HS and the air flow direction are orthogonal to each other, due to an illustration relationship, if the heat sink fins HS is placed such that the heat dissipating fins of the heat sink HS and the air flow direction are parallel with each other rather than the orthogonal relationship, heat can be further transferred.

Furthermore, in the present embodiment, it is preferable that the heat storage system 1 includes a fan F and a through hole TH formed on the floor plate FC. The fan F feeds air of the indoor space IDS to the heat storage space HSS. When the fan F sends the air of the indoor space IDS to the heat storage space HSS, cooled or heated air can be taken into the indoor space IDS from the heat storage space HSS through the through hole TH of the floor plate FC.

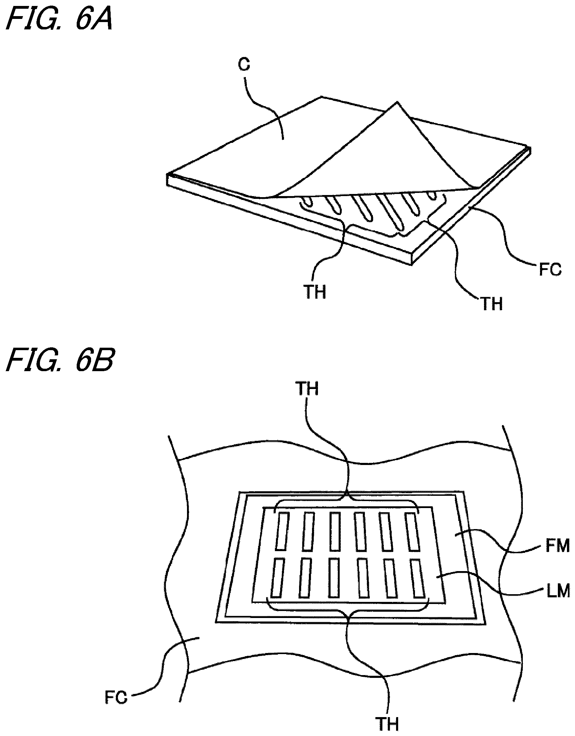

Figs. 6A and 6B are perspective views each showing an example of the through hole TH of the floor plate FC shown in Fig. 1. Fig. 6A shows a first example. Fig. 6B shows a second example.

As shown in Fig. 6A, for example, in the floor plate FC, a plurality of elongated through holes TH are formed, extending in parallel with a diagonal direction of the floor plate FC. When placing an air permeable carpet C excellent in air permeability, on the floor plate FC, cooled or heated air can be taken into the indoor space IDS through the through hole TH.

Also, as shown in Fig. 6B, a large hole is formed in the floor plate FC, the hole is covered with a frame member FM around thereof, and a lid member LM having the plurality of through holes TH is provided on the frame member FM. Even in this configuration, cooled or heated air can be taken into the indoor space IDS through the through hole TH.

The structure of the through hole TH is not limited to the above, and various configurations can be made. Also, in the present embodiment, the free access floor is used as the heat storage space HSS, but the present invention is not limited thereto. For example, when the heat storage space HSS is provided on a ceiling side, the through hole TH is formed in the ceiling material.

Next, the installation method of the latent heat storage material H of the heat storage system 1 according to the present invention and as defined by claim 10 will be described. In the installation method, rather than a transport method in which the latent heat storage material H is enclosed in the bag-shaped container B in advance at a factory or the like and transported to a spot, the latent heat storage material H is enclosed at the spot.

First, the latent heat storage material H is transported from a factory or the like to the spot, in a state of being placed in an ISO tank container (an example of a tank) with a heating coil capable of heating by steam or a liquid transport container (an example of a tank) with a heat retention and heating function.

In addition, the pillow packaging material or the folded bag-shaped container B is transported to the spot and transported to the installation floor (the specific floor among the plurality of floors). Accordingly, the pillow packaging material or the bag-shaped container B is prepared on the installation floor (first step). Here, the pillow packaging material may be a long film roll, a film in which three sides have been heat-sealed in advance, or a long cylindrical film. Since these pillow packaging materials or the bag-shaped container B is excellent in transportability, it is possible to transport the pillow packaging materials or the bag-shaped container B relatively easily to the installation floor.

Next, the latent heat storage material H stored in the ISO tank container or the liquid transport container is transported to the installation floor by a first pump (pump). In this case, the latent heat storage material H is in a state of 10 °C or higher than the melting point to be in a state of having fluidity enough to pump (second step).

Alternatively, in place of the above, the ISO tank container or the liquid transport container storing the latent heat storage material H is lifted by a large crane or the like, and the latent heat storage material H in each container is transported to the installation floor (second step).

At this time, a liquid filling machine as a second pump has been transported to the installation floor. When the pillow packaging material is transported in the first step, the bag-shaped container B obtained by heat-sealing the pillow packaging material is filled with the latent heat storage material H using the liquid filling machine, and sealed by heat sealing or closing the aperture AP (third step).

In addition, when the bag-shaped container B in the folded state is transported in the first step, the bag-shaped container B is filled with the latent heat storage material H using the liquid heat filling through the aperture AP of the bag-shaped container B. After filling, the aperture AP of the bag-shaped container B is sealed (third step).

At the time of filling, the latent heat storage material H is transported to a hopper by the pumping of the first pump in the second step, and the bag-shaped container B may be filled with the latent heat storage material H by gravity fall from the hopper.

After that, the bag-shaped container B is placed on the tray T and installed in the heat storage space HSS (fourth step).

As described above, when the latent heat storage material H is packed in the bag-shaped container B at the spot, compared to a case where the bag-shaped container B in which the latent heat storage material H is packed is transported to the spot, reduction in transport work is achieved. In particular, when packing in the bag-shaped container B at the factory and transporting the bag-shaped container B to the spot, it is necessary to stack the bag-shaped container B from the factory. However, when using the above method, the latent heat storage material H can be put into the tank as it is and transported, and reduction in work is further achieved.

Next, an action of the heat storage system 1 according to the present embodiment will be described with reference to Fig. 1. First, in the heat storage space HSS, the latent heat storage material H having a melting point or a freezing point in a range of 5 °C or higher and 30 °C or lower is installed. Therefore, the latent heat storage material H is in a comfortable temperature zone of a resident of the indoor space IDS.

Furthermore, since the heat resistance between the heat storage space HSS and the external air is set to be greater than the heat resistance between the heat storage space HSS and the indoor space IDS, cold or warm heat from the latent heat storage material H selectively leaks to the indoor space IDS and it is possible to cool and heat the indoor space IDS to a comfortable temperature by using the leakage. That is, in the present embodiment, heating and cooling are performed by using the leakage that has been considered to be a problem in the related art.

In addition, since the latent heat storage material H is in a comfortable temperature zone, for example, even immediately before summer when cold heat is desired to store, it is possible to store the cold heat if there is a day when the temperature abruptly falls to reach the freezing point or lower of the latent heat storage material H. Similarly, even immediately before winter when warm heat is desired to store, it is possible to store the warm heat if there is a day when the temperature abruptly increases to reach the melting point or higher of the latent heat storage material H. Opportunities to store the cold or warm heat are given successively. Therefore, weight reduction of the latent heat storage material H becomes to be achieved.

That is, as in the related art, when using water of which the melting point and the freezing point are 0 °C as a heat storage material, the water is not in the comfortable temperature zone. Therefore, only during at a temperature below the comfortable temperature zone (for example, 0 °C or lower), it is possible to store cold heat. Therefore, there is no opportunity to store the cold heat immediately before summer, and it is necessary to keep the cold heat stored in winter with little leakage until summer. However, in the present embodiment, an opportunity to store cold heat successively is given and the weight reduction of the latent heat storage material H becomes to be achieved. The same is applied to warm heat storage.

In this manner, according to the heat storage system 1 according to the present embodiment, in the heat storage space HSS, the latent heat storage material H having a melting point or a freezing point in a range of 5 °C or higher and 30 °C or lower is installed. Therefore, the latent heat storage material H is in the comfortable temperature zone. Furthermore, since the heat resistance between the heat storage space HSS and the external air is set to be greater than the heat resistance between the heat storage space HSS and the indoor space IDS, cold or warm heat from the latent heat storage material H selectively leaks to the indoor space IDS and it is possible to cool and heat the indoor space IDS to a comfortable temperature by using the leakage. In addition, since the latent heat storage material H in the comfortable heat zone is used, for example, even immediately before summer when cold heat is desired to store, it is possible to store the cold heat if there is a day when the temperature abruptly falls to reach the freezing point or lower of the latent heat storage material H. Similarly, even immediately before winter when warm heat is desired to store, it is possible to store the warm heat if there is a day when the temperature abruptly increases to reach the melting point or higher of the latent heat storage material H. Opportunities to store the cold or warm heat are given successively. Therefore, weight reduction of the latent heat storage material H can be achieved. Accordingly, both heating and cooling can be performed, and it is possible to achieve a reduction in a weight of the latent heat storage material H to be used when storing heat over the season.

In addition, since the latent heat storage material H is stored in the bag-shaped container B to be placed on the plurality of trays T, it is possible to receive the latent heat storage material H that leaks when the bag-shaped container B is damaged, and also possible to receive condensation water generated when the ambient air cools a dew point or lower to be condensed.

In addition, since the bag-shaped container B made of a film is used, heat can be transferred to air of the heat storage space HSS via the bag-shaped container B of the thin film. The cold or warm heat with a small temperature difference with respect to the freezing point or the melting point can be taken and stored more efficiently or dissipated.

In addition, the heat sink HS placed on the bag-shaped container B made of a film is further provided, the bag-shaped container B changes into a shape that can receive the heat sink just by placing the heat sink HS using a thin film called the film. Accordingly, heat can be transferred to air of the heat storage space HSS by the heat sink HS, and the cold or warm heat with a small temperature difference with respect to the freezing point or the melting point can be taken and stored still more efficiently or dissipated.

In addition, each of the plurality of trays T has a dimension that is substantially the same as the floor plate FC and has notches T1 to avoid the pedestals PD, formed at four corners. Therefore, the plurality of trays T are arranged without gaps, and are installed with good area efficiency to cover the entire surface of the floor slab FS. Also, the pedestal PD can be placed so as to fit the notches T1 of the tray T and positioning of the pedestal PD can be easily performed. In addition, also in a case where each of the plurality of trays T' has a dimension, that is a size of two or more integer multiples of the floor plate, in the longitudinal direction and the lateral direction, similarly, a plurality of trays T' are arranged without gaps, and are installed with good area efficiency to cover the entire surface of the floor slab FS. Also, the pedestal PD can be placed so as to fit the notches T1' and the hole part T2' of the tray T' and positioning of the pedestal PD can be easily performed.

In addition, since the latent heat storage material H having a heat storage capacity of 1 kWh or more or a weight of 20 kg or more per square meter of floor area is installed, the amount of the latent heat storage material H can be set to be appropriate for use of the cold or warm heat over season.

In addition, the plurality of trays T have the adiabatic layer AL that insulates the latent heat storage material H stored in the bag-shaped container B and the floor slab FS from each other. Therefore, when insulation from the floor slab FS is required, as in an internally insulated building, adiabaticity can be secured, and the amount of leakage of stored cold or warm heat through the floor slab FS can be reduced.

In addition, the plurality of trays T have the sensor S for detecting breakage of the bag-shaped container B, such as the weight sensor, the pressure sensor, or the wet sensor. Therefore, when the bag-shaped container B is broken and the latent heat storage material H is damaged from wind from the inside of the bag-shaped container B, this can be detected by the weight sensor or the pressure sensor. When the latent heat storage material H leaks, this can be detected by the wet sensor.

In addition, the heat storage space HSS is adjacent to the indoor space IDS via the floor material (or ceiling material) of the indoor space IDS, and the through hole TH is formed in the floor material. Therefore, the cold or warm heat stored in the latent heat storage material H of the heat storage space HSS can be provided to the indoor space IDS through the through hole TH.

In addition, according to the installation method of the latent heat storage material H in the heat storage system 1 according to the present embodiment, there is provided a step of preparing the bag-shaped container B that has the aperture AP and is made of the pillow packing material or the foldable film in a specific floor. Therefore, the pillow packaging material or the bag-shaped container B which is easy to be transported is prepared. In addition, the latent heat storage material H is transported to the specific floor by pumping using the first pump or by lifting the tank storing the latent heat storage material H, and the bag-shaped container B formed by heat-sealing the pillow packaging material or the bag-shaped container B made of the foldable film is filled with the latent heat storage material H and sealed. Therefore, the latent heat storage material H is packed in the bag-shaped container B at the spot, and compared to a case where the bag-shaped container B in which the latent heat storage material H is packed in advance is transported, reduction in transport work is achieved. In particular, when packing in the container at the factory and transporting the container to the spot, it is necessary to stack the bag-shaped container B and the like from the factory. However, in the above method, the latent heat storage material H can be put into the tank as it is and transported, and reduction in work is further achieved. Then, since the bag-shaped container B in which the latent heat storage material H is enclosed is installed in the heat storage space HSS on the specific floor, reduction in installation work of the latent heat storage material H as a whole can be achieved.

Hereinbefore, the present invention has been described based on embodiments. However, the present invention is not limited to the embodiments described above, modifications can be added in a range not departing from the scope and wording of the claims, and other techniques may be combined as appropriate as far as possible. Furthermore, known or well-known techniques may be combined as far as possible.

For example, in the embodiment, the heat storage space HSS is adjacent to the indoor space IDS via the plurality of floor plates FC, but is not limited thereto. The heat storage space HSS may have a structure adjacent to the indoor space IDS via the ceiling material or the wall material (as an example of the partition material) or may also be a space defined by double skins and the like of the facade part and the wall part.

In addition, in the embodiment, although a case where a building is internally insulated has been assumed and described, in a case where the building is externally insulated, a configuration as follows may be adopted. First, in a case where the building is externally insulated, the building is covered by a high thermal insulation covering. Therefore, a frame of the building will be located in the adiabatic space AS. Accordingly, the frame may be used as the heat storage material. In this case, the latent heat storage material H may be installed in heat transferable with the floor slab FS. In particular, in a case of using the tray T, for example, the tray T may have a single bottom, or may be made of a metal having good heat conductivity.

Furthermore, in a case where the building is externally insulated, in order to make the heat storage and heat dissipation effects limitedly act on the indoor space IDS immediately above, for example, an adiabatic layer in which an aluminum vapor deposition sheet and a foam sheet are laminated on the lower surface of the floor slab FS or a foaming agent is sprayed to the lower surface of the floor slab FS is provided. However, a high insulation ceiling material may be used for the ceiling material of the indoor space IDS immediately below the floor slab FS. In addition, when it is desired to limitedly act on the indoor space IDS immediately below the floor slab FS, for example, an adiabatic layer in which an aluminum deposition sheet and a foam sheet are laminated on the latent heat storage material H may be provided or high insulation floor plate FC may be used. In addition, the effect may act on both sides of immediately above and immediately below the indoor space IDS.

By way of caution, when the building is internally insulated, which is common in Japan, the insulation against the outside air is performed by providing the adiabatic layer in an interior space of the frame, and the frame is outside the adiabatic space AS. That is, in a case of a building with internal insulation specification, it is desirable to insulate the heat storage space HSS from the frame in order to suppress the heat dissipation to the outside air via the frame. In this case, when the latent heat storage material H is installed on the floor slab FS, it is necessary to install the latent heat storage material H so as to be insulated from the floor slab FS, by using the tray T having the adiabatic layer AL described above or the like. In this case, the effects of heat storage and heat dissipation limitedly act on the indoor space immediately above.

In addition, in the present embodiment, although four bag-shaped containers B are placed on the tray T, the present invention is not limited thereto, and one to three or five or more bag-shaped containers B may be placed. In particular, when using the plurality of bag-shaped containers B, the volume is divided into a capacity of several hundreds of grams to approximately 20 kg, and even when a molten state continues for a long time, a problem due to separation of the components can be avoided. Also, from the viewpoint of workability, it is preferable for a case where there is a step of transportation after filling.

In addition, the tray T is preferably in a stackable shape. For example, when making a side wall TW of the tray T shown in Fig. 4 slightly open at an upper side, that is, when making the tray T into a section bracket shape, the intermediate wall T4 of the tray T on a lower side and the bottom wall T3 of the tray T on an upper side contact with each other, and the plurality of trays T can be stacked. Accordingly, the tray T can also be easily transported.

### INDUSTRIAL APPLICABILITY

According to the present invention, effects that it is possible to provide a heat storage system that can perform both heating and cooling and can achieve a reduction in a weight of the latent heat storage material to be used when storing heat over the season, and an installation method of a latent heat storage material thereof are exhibited. The present invention exhibiting the effects is useful in relation to a heat storage system used in buildings and an installation method of a latent heat storage material thereof.

### REFERENCE SIGNS LIST

1: Heat storage system
AS: Adiabatic space
IDS: Indoor space
HSS: Heat storage space
H: Latent heat storage material
B, B1 to B3: Bag-shaped container (Container)
AP: Aperture
NV: Natural ventilator (Control unit)
T, T': Tray
T1, T1': Notch
T2': Hole part
T3: Bottom wall
T4: Intermediate wall
AL: Adiabatic layer
TW: Side wall
HS: Heat sink
F: Fan
TH: Through hole
FC: Floor plate
FS: Floor slab
PD: Pedestal
S: Sensor

## Claims

1. A heat storage system (1) comprising:
an indoor space (IDS);
a heat storage space (HSS) which is adjacent to the indoor space (IDS) and in which a latent heat storage material (H) having a melting point or a freezing point in a range of 5 °C or higher and 30 °C or lower is installed; and
a control unit (NV) for controlling introduction and blocking of outside air to the heat storage space (HSS), wherein
a heat resistance between the heat storage space (HSS) and the outside air is set to be greater than a heat resistance between the heat storage space (HSS) and the indoor space (IDS), and
**characterised in that** a heat transmission coefficient between the heat storage space (HSS) and the outside air is 1 W/m²K or less on average on the outer wall, and
a heat transmission coefficient between the heat storage space (HSS) and the indoor space (IDS) is 2 W/m²K or more and 15 W/m²K or less.

2. The heat storage system according to claim 1, further comprising:
a plurality of trays (T) installed in the heat storage space (HSS), wherein
a container (B) storing the latent heat storage material (H) is placed on each of the plurality of trays.

3. The heat storage system (1) according to claim 2, wherein
the container (B) is a bag-shaped container made of a film.

4. The heat storage system (1) according to claim 3, further comprising:
a heat sink (HS) placed on the bag-shaped container (B).

5. The heat storage system (1) according to any one of claims 2 to 4, wherein
the indoor space (IDS) and the heat storage space (HSS) are partitioned by a plurality of floor plates (FC) supported at four corners by a plurality of pedestals (PD) arranged at regular intervals in a longitudinal direction and a lateral direction in a plan view, and
each of the plurality of trays (T) has a dimension that is substantially the same as the floor plate (FC) and has notches (T1) to avoid the pedestals, formed at four corners, or has a dimension, that is a size of two or more integer multiples of the floor plate (FC), in the longitudinal direction and the lateral direction and has a plurality of notches (T1) to avoid the pedestals (PD), and a hole part through which the pedestal (PD) penetrates.

6. The heat storage system (1) according to any one of claims 2 to 5, wherein the heat storage space (HSS) is located immediately above a floor slab (FS), and provided with the latent heat storage material (H) having a heat storage capacity of 1 kWh or more or a weight of 20 kg or more, per square meter of floor area.

7. The heat storage system (1) according to claim 6, wherein
the plurality of trays (T) have an adiabatic layer (AL) between the latent heat storage material (H) stored in the container (B) and the floor slab (FS) to insulate both the latent heat storage material (H) and the floor slab (FS) from each other.

8. The heat storage system (1) according to any one of claims 2 to 7, wherein the plurality of trays (T) have a sensor (S) for detecting a breakage of the container (B).

9. The heat storage system (1) according to any one of claims 1 to 8, wherein the heat storage space (HSS) is adjacent to the indoor space (IDS) via a partition material which is a ceiling material or a floor material of the indoor space (IDS), and
a through hole (TH) is formed in the partition material.

10. An installation method of a latent heat storage material (H) in a heat storage system (1) according to claim 1,
the method comprising:
a first step of preparing a pillow packing material or a bag-shaped container (B) made of a foldable film in the specific floor;
a second step of transporting the latent heat storage material (H) with a temperature 10 °C or higher than the melting point to the specific floor by pumping using a pump or by lifting a tank storing the latent heat storage material (H);
a third step of, when the pillow packaging material is prepared in the first step, filling the bag-shaped container (B) formed by heat-sealing the pillow packaging material with the latent heat storage material (H) transported in the second step at the specific floor and sealing the bag-shaped container (B), and when the bag-shaped container (B) made of foldable film is prepared in the first step, filling the bag-shaped container (B) with the latent heat storage material (H) transported in the second step at the specific floor and sealing the bag-shaped container (B); and
a fourth step of installing the bag-shaped container (B) in which the latent heat storage material (H) is enclosed in the third step to the heat storage space (HSS) adjacent to the indoor space (IDS) in the specific floor.

## Patentansprüche

1. Ein Wärmespeichersystem (1) aufweisend:
einen Innenraum (IDS), einen Wärmespeicherraum (HSS), der neben dem Innenraum (IDS) ist und in den ein Latentwärmespeichermaterial (H) mit einem Schmelzpunkt oder einem Gefrierpunkt in einem Bereich von 5 °C oder höher und 30 °C oder weniger installiert ist, und eine Steuereinheit (NV) zum Steuern der Einfuhr und Blockierung von Außenluft zum Wärmespeicherraum (HSS), wobei ein Wärmewiderstand zwischen dem Wärmespeicherraum (HSS) und der Außenluft größer gesetzt ist als ein Wärmewiderstand zwischen dem Wärmespeicherraum (HSS) und dem Innenraum (IDS), und
**dadurch gekennzeichnet, dass**
ein Wärmedurchgangskoeffizient zwischen dem Wärmespeicherraum (HSS) und der Außenluft 1 W/m²K oder weniger im Durchschnitt an der Außenwand ist, und ein Wärmedurchgangskoeffizient zwischen dem Wärmespeicherraum (HSS) und dem Innenraum (IDS) 2 W/m²K oder mehr und 15 W/m²K oder weniger ist.

2. Das Wärmespeichersystem gemäß Anspruch 1, weiter aufweisend: eine Vielzahl von Fächern (T), installiert in dem Wärmespeicherraum (HSS), wobei ein Container (B) der das Latentwärmespeichermaterial (H) speichert, an jedem der Vielzahl der Fächer platziert ist.

3. Das Wärmespeichersystem (1) gemäß Anspruch 2, wobei der Container (B) ein Beutelgestalt-Container ist, hergestellt aus einem Film.

4. Das Wärmespeichersystem (1) gemäß Anspruch 3, weiter aufweisend: einen Wärmeabfluss (HS), platziert an dem Beutelgestalt-Container (B).

5. Das Wärmespeichersystem (1) gemäß einem der Ansprüche 2 bis 4, wobei der Innenraum (IDS) und der Wärmespeicherraum (HSS) mittels einer Vielzahl von Flurplatten (FC) geteilt sind, unterstützt an vier Ecken durch eine Vielzahl von Podesten (PD), angeordnet an regelmäßigen Intervallen in einer Längsrichtung und einer Breitenrichtung in einer Draufsicht, und jeder der Vielzahl von Fächern (T) eine Größe hat, die im Wesentlichen gleich ist zu der einer Flurplatte (FC) und Mulden (T1) hat, um die Podeste zu vermeiden, die an den vier Ecken geformt sind, oder eine Größe hat, die eine Größe ist von zwei oder mehr ganzzahligen Vielfachem der Flurplatte (FC), in der Längsrichtung und der Breitenrichtung und eine Vielzahl von Mulden (T1) hat, um die Podeste (PD) zu vermeiden und ein Lochteil, durch das das Podest (PD) hindurchdringt.

6. Das Wärmespeichersystem (1) gemäß einem der Ansprüche 2 bis 5, wobei der Wärmespeicherraum (HSS) unmittelbar über einer Bodenplatte (FS) platziert ist und mit einem Latentwärmespeichermaterial (H) mit einer Wärmespeicherkapazität von 1 kWh oder mehr oder einem Gewicht von 20 kg oder mehr, pro Quadratmeter von Bodenfläche bereitgestellt ist.

7. Das Wärmespeichersystem (1) gemäß Anspruch 6, wobei die Vielzahl der Fächern (T) eine adiabatische Lage (AL) haben, zwischen dem Latentwärmespeichermaterial (H), das in dem Container (B) gespeichert ist und der Bodenplatte (FS), um beides zu isolieren, das Latentwärmespeichermaterial (H) und die Bodenplatte (FS) voneinander.

8. Das Wärmespeichersystem (1) gemäß einem der Ansprüche 2 bis 7, wobei die Vielzahl der Fächer (T) einen Sensor (S) hat zum Detektieren eines Bruches des Containers (B).

9. Das Wärmespeichersystem (1) gemäß einem der Ansprüche 1 bis 8, wobei der Wärmespeicherraum (HSS) neben dem Innenraum (IDS) durch ein Teilungsmaterial ist, das ein Deckenmaterial ist oder ein Bodenmaterial des Innenraums (IDS) ist, und ein Durchgangsloch (TH) in dem Teilungsmaterial geformt ist.

10. Eine Installationsmethode von einem Latentwärmespeichermaterial (H) in einem Wärmespeichersystem (1) gemäß Anspruch 1, wobei die Methode aufweist:
einen ersten Schritt des Präparierens eines Kissenpackmaterials oder eines beutelgeformten Containers (B), hergestellt aus einem faltbaren Film in dem spezifischen Boden, einen zweiten Schritt des Transports des Latentwärmespeichermaterials (H) mit einer Temperatur von 10 °C oder höher als der Schmelzpunkt zum spezifischen Boden durch Pumpen unter der Benutzung einer Pumpe oder durch Anheben eines Tanks, der das Latentwärmespeichermaterial (H) speichert, einen dritten Schritt, wenn das Kissenpackmaterial in dem ersten Schritt vorbereitet wird, Füllen des beutelgeformten Containers (B), geformt durch eine Hitzeabdichtung des Kissenpackmaterials mit dem Latentwärmespeichermaterial (H), das im zweiten Schritt zum spezifischen Boden transportiert ist und Abdichten des beutelgeformten Containers (B), und wenn der beutelgeformte Container (B) hergestellt aus faltbaren Film in dem ersten Schritt präpariert ist, Füllen des beutelgeformten Containers (B) mit dem Latentwärmespeichermaterial (H), das in dem zweiten Schritt zu dem spezifischen Boden transportiert wurde und Abdichten des beutelgeformten Containers (B), und einen vierten Schritt des Installierens des beutelgeformten Containers (B), bei dem das Latentwärmespeichermaterial (H) in dem dritten Schritt eingeschlossen ist, zu dem Wärmespeicherraum (HSS), angrenzend zu dem Innenraum (IDS) des spezifischen Bodens.

## Revendications

1. Système de stockage de chaleur (1) comprenant :
un espace intérieur (IDS) ;
un espace de stockage de chaleur (HSS) qui est adjacent à l'espace intérieur (IDS) et dans lequel est installé un matériau de stockage de chaleur latente (H) ayant un point de fusion ou un point de congélation dans une plage supérieure ou égale à 5°C et inférieure ou égale à 30 °C ; et
une unité de commande (NV) pour commander l'introduction et le blocage de l'air extérieur dans l'espace de stockage de chaleur (HSS), dans lequel
une résistance à la chaleur entre l'espace de stockage de chaleur (HSS) et l'air extérieur est réglée pour être supérieure à une résistance à la chaleur entre l'espace de stockage de chaleur (HSS) et l'espace intérieur (IDS), et
**caractérisé en ce que**
un coefficient de transmission de la chaleur entre l'espace de stockage de chaleur (HSS) et l'air extérieur est inférieur ou égal à 1 W/m²K en moyenne sur la paroi extérieure, et
un coefficient de transmission de la chaleur entre l'espace de stockage de chaleur (HSS) et l'espace intérieur (IDS) est supérieur ou égal à 2 W/m²K et inférieur ou égal à 15 W/m²K.

2. Système de stockage de chaleur selon la revendication 1, comprenant en outre :
une pluralité de plateaux (T) installés dans l'espace de stockage de chaleur (HSS), dans lequel
un récipient (B) stockant le matériau de stockage de chaleur latente (H) est placé sur chacun de la pluralité de plateaux.

3. Système de stockage de chaleur (1) selon la revendication 2, dans lequel
le récipient (B) est un récipient en forme de sac réalisé en un film.

4. Système de stockage de chaleur (1) selon la revendication 3, comprenant en outre :
un dissipateur thermique (HS) placé sur le récipient en forme de sac (B).

5. Système de stockage de chaleur (1) selon l'une quelconque des revendications 2 à 4, dans lequel
l'espace intérieur (IDS) et l'espace de stockage de chaleur (HSS) sont séparés par une pluralité de plaques de plancher (FC) supportées aux quatre coins par une pluralité de socles (PD) agencés à intervalles réguliers dans une direction longitudinale et une direction latérale dans une vue en plan, et
chacun de la pluralité de plateaux (T) a une dimension qui est sensiblement la même que celle de la plaque de plancher (FC) et a des encoches (T1) pour éviter les socles, formées aux quatre coins, ou a une dimension, c'est-à-dire une taille de deux multiples entiers ou plus de la plaque de plancher (FC), dans la direction longitudinale et la direction latérale et qui a une pluralité d'encoches (T1) pour éviter les socles (PD), et une partie de trou à travers laquelle pénètre le socle (PD).

6. Système de stockage de chaleur (1) selon l'une quelconque des revendications 2 à 5, dans lequel
l'espace de stockage de chaleur (HSS) est situé immédiatement au-dessus d'une dalle de plancher (FS) et est pourvu du matériau de stockage de chaleur latente (H) ayant une capacité de stockage de chaleur supérieure ou égale à 1 kWh ou un poids supérieur ou égal à 20 kg, par mètre carré de surface de plancher.

7. Système de stockage de chaleur (1) selon la revendication 6, dans lequel
la pluralité de plateaux (T) ont une couche adiabatique (AL) entre le matériau de stockage de chaleur latente (H) stocké dans le récipient (B) et la dalle de plancher (FS) pour isoler à la fois le matériau de stockage de chaleur latente (H) et la dalle de plancher (FS) l'un(e) de l'autre.

8. Système de stockage de chaleur (1) selon l'une quelconque des revendications 2 à 7, dans lequel
la pluralité de plateaux (T) ont un capteur (S) pour détecter une rupture du récipient (B).

9. Système de stockage de chaleur (1) selon l'une quelconque des revendications 1 à 8, dans lequel
l'espace de stockage de chaleur (HSS) est adjacent à l'espace intérieur (IDS) via un matériau de séparation qui est un matériau de plafond ou un matériau de plancher de l'espace intérieur (IDS), et
un trou traversant (TH) est formé dans le matériau de séparation.

10. Procédé d'installation d'un matériau de stockage de chaleur latente (H) dans un système de stockage de chaleur (1) selon la revendication 1,
le procédé comprenant :
une première étape consistant à préparer un matériau d'emballage d'oreiller ou un récipient en forme de sac (B) réalisé en un film pliable dans le plancher spécifique ;
une deuxième étape consistant à transporter le matériau de stockage de chaleur latente (H) avec une température de 10 °C ou supérieure au point de fusion vers le plancher spécifique par pompage en utilisant une pompe ou par soulèvement d'un réservoir stockant le matériau de stockage de chaleur latente (H) ;
une troisième étape consistant, lorsque le matériau d'emballage d'oreiller est préparé dans la première étape, à remplir le récipient en forme de sac (B) formé en thermoscellant le matériau d'emballage d'oreiller avec le matériau de stockage de chaleur latente (H) transporté dans la deuxième étape au niveau du plancher spécifique et à sceller le récipient en forme de sac (B) et, lorsque le récipient en forme de sac (B) réalisé en film pliable est préparé dans la première étape, à remplir le récipient en forme de sac (B) avec le matériau de stockage de chaleur latente (H) transporté dans la deuxième étape au niveau du plancher spécifique et à sceller le récipient en forme de sac (B) ; et
une quatrième étape consistant à installer le récipient en forme de sac (B) dans lequel le matériau de stockage de chaleur latente (H) est enfermé dans la troisième étape dans l'espace de stockage de chaleur (HSS) adjacent à l'espace intérieur (IDS) dans le plancher spécifique.
